# EUROPEAN PATENT APPLICATION

(11) **EP 4 804 105 A1**
(43) Date of publication of application: **09.09.2026**
(21) Application number: 26160612.3
(22) Date of filing: 25.02.2026
(51) Int. Cl.: G06Q 30/0241

(54) **ADVERTISEMENT IMAGE DESIGN SUPPORT DEVICE, ADVERTISEMENT IMAGE DESIGN SUPPORT METHOD, AND PROGRAM**

(30) Priority: 03.03.2025 JP 2025032545
(71) Applicant: RISO KAGAKU CORPORATION, Tokyo 108-8385 (JP)
(72) Inventor: OKADA, Yoshiyuki, Tokyo, 108-8385 (JP)
(74) Representative: Winter, Brandl - Partnerschaft mbB

(57) **Abstract**

An advertisement image design support device (100) includes an acquisition unit (111) that acquires advertisement content and packaging material information of a packaging material (P) on which the advertisement content is printed, and a design support unit (112) that supports design of the advertisement content based on the packaging material information.

## Description

### BACKGROUND OF THE INVENTION

### 1. TECHNICAL FIELD

The present invention relates to an advertisement image design support device, an advertisement image design support method, and a program.

### 2. DESCRIPTION OF THE RELATED ART

In the related art, information processing systems have been proposed that allow users of packages for packaging to select their desired content from a large number of package contents provided by a large number of designers including ordinary people, and to use the content for printing (see, for example, JP 2013-084310 A).

### SUMMARY OF THE INVENTION

In recent years, the number of individual business owners and start-ups selling products on small electronic commerce (EC) sites is increasing with the growth of companies contracted to operate small EC sites. Most small EC sites are specialized stores having a small selection and many competing stores. Therefore, small EC sites need to attract customers by themselves, and need to be differentiated to catch fixed customers. For differentiation, it is considered to print advertisements on packaging materials housing products sold on small EC sites using an ink jet printer. However, business owners operating the small EC sites have smaller economic scales and lower design skills than business owners operating large EC sites. In addition, when advertisement images are printed on packaging materials, the printed color may be different from when printed on white paper depending on the colors and materials of the packaging materials. Since there are not many designers who are good at design for such packaging material printing, there may be no room to search for or employ such a designer, particularly for small EC sites.

An object of the present invention is to provide an advertisement image design support device, an advertisement image design support method, and a program with which advertisement content to be printed on packaging materials can be designed without specialized design knowledge.

In one aspect, an advertisement image design support device includes an acquisition unit that acquires advertisement content and packaging material information of a packaging material on which the advertisement content is printed, and a design support unit that supports design of the advertisement content based on the packaging material information.

According to the aspect, it is possible to design advertisement content to be printed on packaging materials without specialized design knowledge.

### BRIEF DESCRIPTION OF THE DRAWINGS

FIG. 1 is an explanatory diagram showing a configuration of an advertisement image design support system and the like in one embodiment;
FIG. 2 is a block diagram showing a control configuration of an advertisement image design support device according to one embodiment;
FIG. 3 is an explanatory diagram for explaining printing of an advertisement image on a packaging material in one embodiment;
FIG. 4 is a sequence diagram for explaining an advertisement image design support method in one embodiment;
FIG. 5 is a table showing examples of a combination of a product housed in a packaging material and an advertisement printed on the packaging material in one embodiment;
FIG. 6 is a table showing examples of advertisement conditions and designer conditions for matching in one embodiment; and
FIG. 7 is a table showing examples of advertisement images (provisional submission images), simulation images, and advice in one embodiment.

### DETAILED DESCRIPTION

Hereinafter, an advertisement image design support device, an advertisement image design support method, and a program according to one embodiment of the present invention will be described with reference to the drawings.

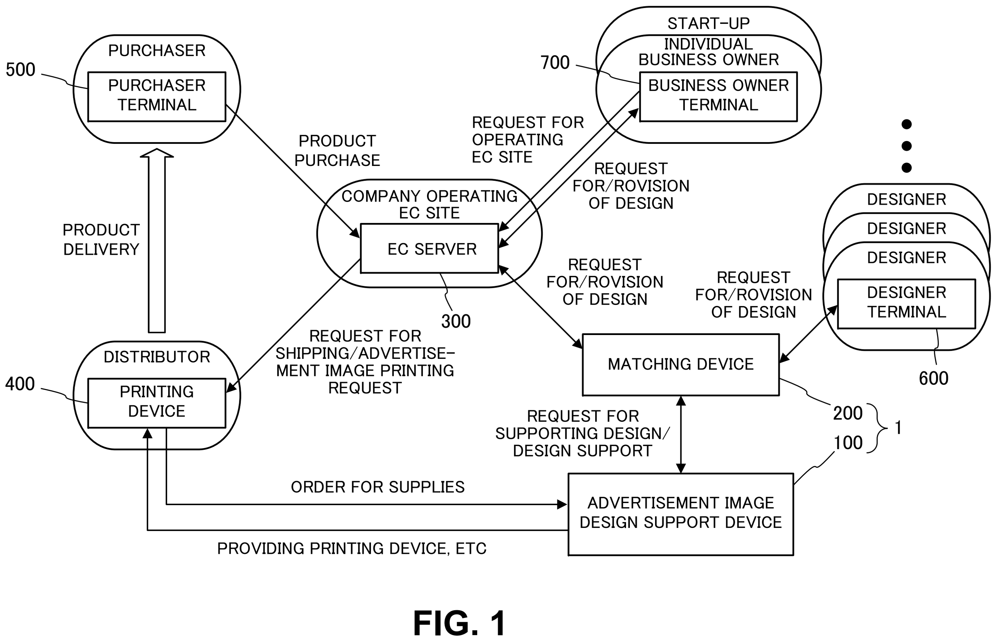

FIG. 1 is an explanatory diagram showing a configuration of an advertisement image design support system 1 and the like according to one embodiment.

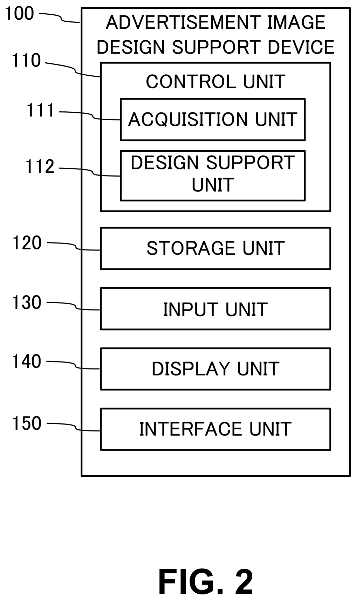

FIG. 2 is a block diagram showing a control configuration of an advertisement image design support device 100.

As shown in FIG. 1, the advertisement image design support system 1 includes an advertisement image design support device 100 and a matching device 200. An EC server 300 of a company operating an EC site is connected to the matching device 200, a printing device 400 of a distributor, a purchaser terminal 500 of a purchaser, a business owner terminal 700 of an individual business owner, a business owner terminal 700 of a small or medium-sized company such as a start-up, and the like via a network such as the Internet. In addition, the matching device 200 is connected to, in addition to the EC server 300, the advertisement image design support device 100 and designer terminals 600 of a plurality of designers via a network. In addition, the advertisement image design support device 100 is connected to, in addition to the matching device 200, the printing device 400 via a network.

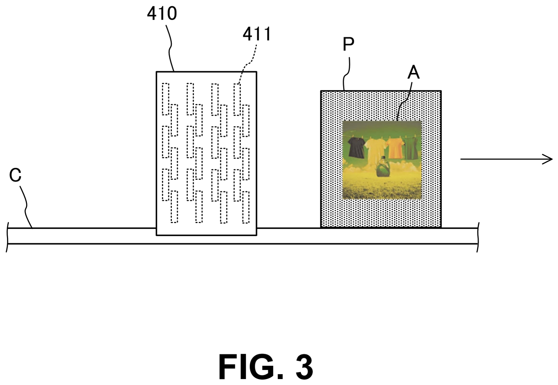

In the example shown in FIG. 1, the EC server 300 operates (manages order information and shipping information) a plurality of small EC sites requested to be operated by individual business owners and small and medium-sized companies such as start-ups. A product purchased by a purchaser (purchaser terminal 500) on a small EC site is housed (picked or packed) in a packaging material P (see FIG. 3) by, for example, a third party logistics (3PL) distributor at the request of the EC server 300 or the business owner terminal 700, and is delivered to the purchaser by a transportation company. The printing device 400 of the distributor prints an advertisement image A (see FIG. 3) designed by a designer (designer terminal 600) matched by a matching application operated and managed by the matching device 200 on the packaging material P. As will be described in detail later, the advertisement image A is designed using support for advertisement content design by the advertisement image design support device 100. The advertisement image design support device 100 may provide the printing device 400 to the distributor, provide support for color management of the printing device 400 that matches the advertisement image A and the packaging material P, and receive an order for supplies (consumables) to be used in the printing device 400 from the distributor.

As shown in FIG. 2, the advertisement image design support device 100 is a server device including a control unit 110, a storage unit 120, an input unit 130, a display unit 140, and an interface unit 150. The advertisement image design support system 1 includes the advertisement image design support device 100 and the matching device 200, but the advertisement image design support device 100 may also serve as the matching device 200. In addition, the EC server 300 may also serve as at least one of the advertisement image design support device 100 and the matching device 200. That is, the EC server 300 may function as the advertisement image design support device 100 or the matching device 200.

The control unit 110 has, for example, one or more processors (for example, central processing units (CPUs)) functioning as an arithmetic processing device that controls operations of the units of the advertisement image design support device 100. This processor functions as, for example, an acquisition unit 111 and a design support unit 112 by reading and executing a predetermined program from the storage unit 120 or a storage medium (non-transitory computer-readable recording medium) attachable to and detachable from the advertisement image design support device 100. In this manner, the control unit 110 (or advertisement image design support device 100) functions as an example of a computer that executes a program.

For example, the acquisition unit 111 acquires advertisement content and packaging material information (color, material, and the like) of the packaging material P on which the advertisement content (for example, advertisement image A corresponding to advertisement content) is printed from the matching device 200. The advertisement content may include the advertisement image A itself, an advertisement outline (image composition such as the arrangement of the product in the image and only a product logo), advertisement conditions, and the like. The advertisement conditions include advertisement effects (repeat purchases, sales guide, and the like), the type of the packaging material P as a printing target (brown cardboard for a brown cardboard box, white cardboard for a white cardboard box, and the like), a product (product type) as an advertisement target, and the like. The product as an advertisement target matches the product housed in the packaging material P on which the advertisement image A is printed, but may not match the product.

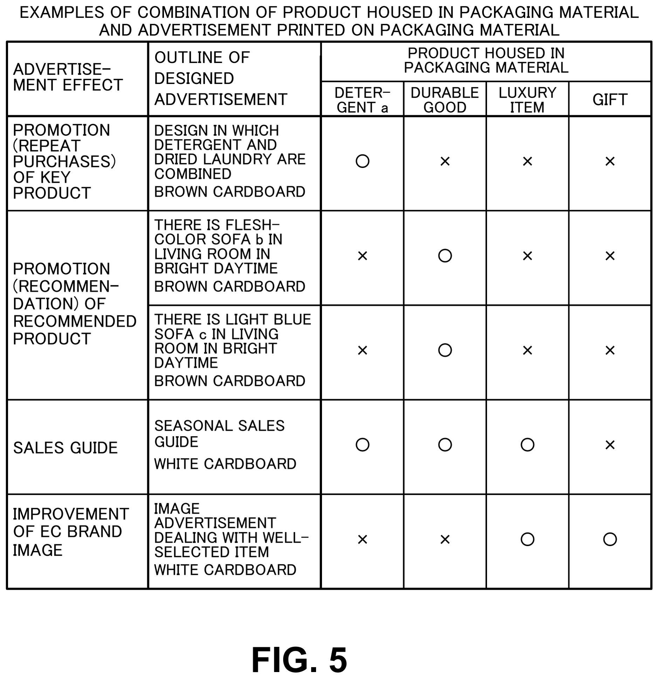

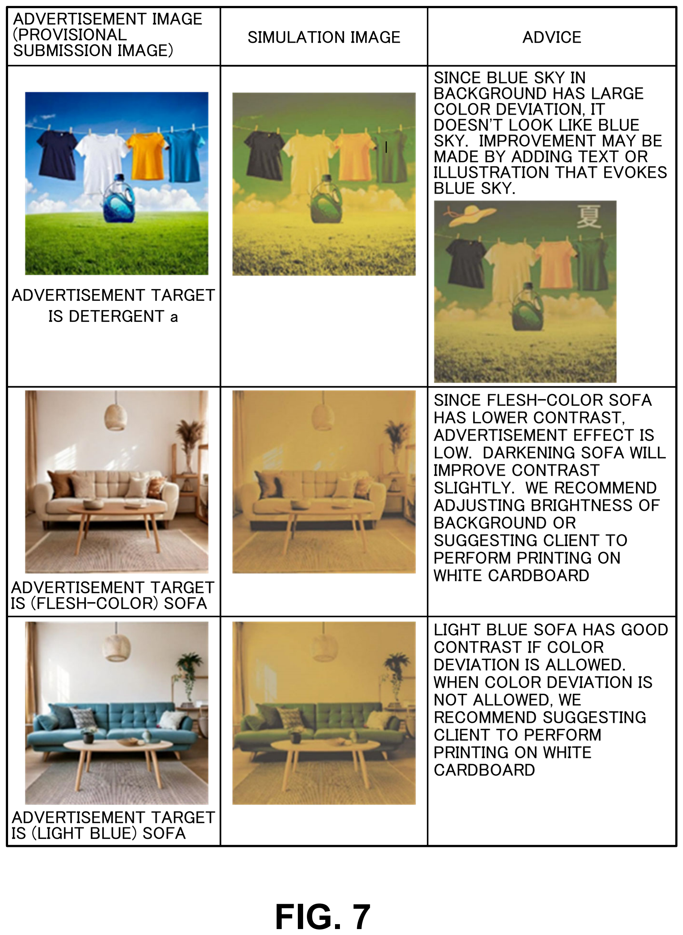

By the way, as shown in FIG. 5, a plurality of types of advertisements (advertisement images A) having different advertisement effects (advertisement purposes), advertisement outlines, and the like may be prepared for each business owner, and selectively used according to the product housed in the packaging material P. In other words, the advertisement image A may be matched and designed for each product (content) or each advertisement effect. As shown in FIG. 5, an advertisement in which the "promotion (repeat purchases) of a key product" is designated as the advertisement effect, the "design in which a detergent and dried laundry are combined" (see the upper part of FIG. 7) is designated as the outline of a designed advertisement, and the "brown cardboard" is designated as the type of the packaging material P is used, for example, only when the product housed in the packaging material P is a detergent a among the detergent a, a durable good (rug, etc.: durable product), a luxury item (whiskey or hobby-related product), and a gift (product purchased with gift designation, product intended as a gift, product to be delivered to another person, or the like).

In addition, an advertisement in which the "promotion (recommendation) of a recommended product" is designated as the advertisement effect, "there is a flesh-color sofa b in a living room in bright daytime" (see the middle part of FIG. 7) is designated as the outline of a designed advertisement, and the "brown cardboard" is designated as the type of the packaging material P is used only for a durable good. The image composition (advertisement outline) such as the arrangement of the product in the advertisement image A, such as a design in which there is a flesh-color sofa b in a living room in bright daytime, is selected by the business owner terminal 700 before the design is requested. Other examples of the image composition selected by the business owner terminal 700 include design of only a product.

In addition, an advertisement in which the "promotion (recommendation) of a recommended product" is designated as the advertisement effect, "there is a light blue sofa c in a living room in bright daytime" (see the lower part of FIG. 7) is designated as the outline of a designed advertisement, and the "brown cardboard" is designated as the type of the packaging material P is used, for example, only when the product housed in the packaging material P is a durable good.

In addition, an advertisement in which the "sales guide" is designated as the advertisement effect, the "seasonal sales guide" such as Black Friday is designated as the outline of a designed advertisement, and the "white cardboard" is designated as the type of the packaging material P is used, for example, only when the product housed in the packaging material P is a detergent a, a durable good, or a luxury item. The sales guide includes, for example, bargain items, sale periods, and the like.

In addition, an advertisement in which the "improvement of an EC brand image" is designated as the advertisement effect, the "image advertisement dealing with a well-selected item" is designated as the outline of a designed advertisement, and the "white cardboard" is designated as the type of the packaging material P is used, for example, only when the product housed in the packaging material P is a luxury item or a gift. Examples of the improvement of an EC brand image include indications that it is an exclusive product, a product having a limited design, a handmade product, a product taking into consideration sustainable development goals (SDGs), a product whose place of production is well-selected.

The design support unit 112 provides support for advertisement content design based on the packaging material information. For example, the design support unit 112 provides advice on the printing evaluation of the advertisement content when the advertisement content is printed on the packaging material P under the advertisement conditions for design before the design of the advertisement image A, provides advice on the printing evaluation of the advertisement image A when the designed advertisement image A is printed on the packaging material P, and creates and presents a simulation image in which the advertisement image A changes in color when printed on the packaging material P by a simulator. The advice on the printing evaluation is, for example, advice on a detected decrease in the advertisement effect, advice for increasing the advertisement effect, or the like. The design support of the design support unit 112 can be regarded as being provided by a cloud service.

The storage unit 120 has, for example, a memory such as a read only memory (ROM) that is a read-only semiconductor memory in which a predetermined control program is recorded in advance, a random access memory (RAM) that is a semiconductor memory that is used as a working storage area as necessary when the processor executes various control programs and is writable and readable at any time, a hard disk device, and the like.

The input unit 130 has, for example, a keyboard, a mouse, and the like, and receives inputs of various types of information.

The display unit 140 is a display that displays various types of information.

The interface unit 150 transmits and receives various types of information to and from the external devices such as the matching device 200 and the printing device 400. For example, the interface unit 150 receives a request for design support from the matching device 200, transmits advice on the printing evaluation, and receives an order for supply from the printing device 400.

Similarly to the advertisement image design support device 100, the matching device 200, the EC server 300, the printing device 400, the purchaser terminal 500, the designer terminal 600, and the business owner terminal 700 shown in FIG. 1 may have a control unit, a storage unit, an input unit, a display unit, an interface unit, and the like.

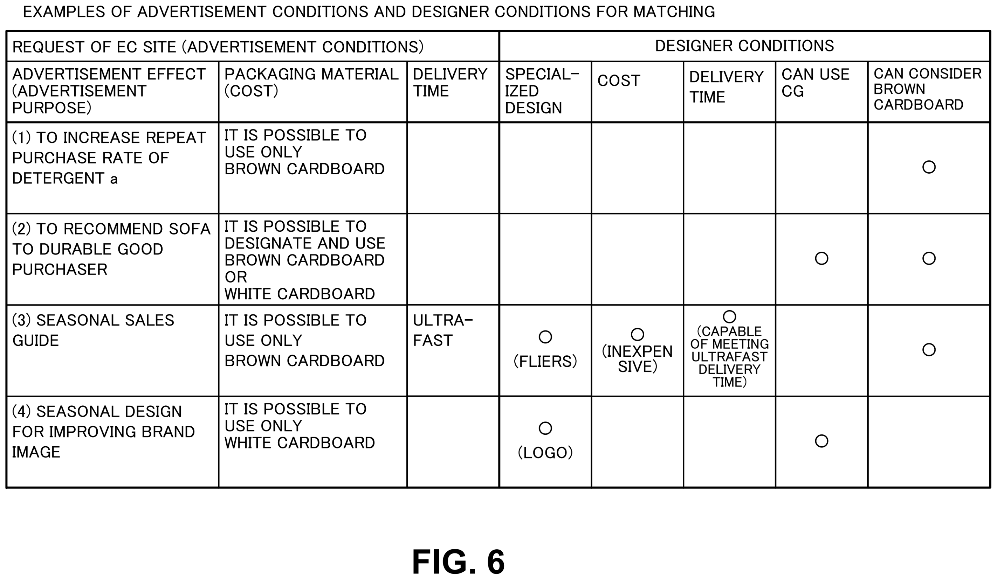

The matching device 200 is, for example, a server device that operates and manages the matching application as described above. As shown in FIG. 6, when the advertisement conditions (request of the EC site) for design of the advertisement image A include "(1) to increase repeat purchase rate of detergent a" as the advertisement effect (advertisement purpose) and "it is possible to use only brown cardboard" as the type of the packaging material P, the matching device 200 carries out matching with a designer who can consider brown cardboard as a condition of the designer. When there are a plurality of designers matching the conditions, the matching priority may be appropriately set from designers who meet the conditions well, designers who are highly evaluated, designers who are inexpensive, designers with short delivery times, and the like. The field of the packaging material P is not limited to the brown cardboard, the white cardboard, and the like, and other conditions such as materials with different costs may be adopted.

In addition, when the advertisement conditions include "(2) to recommend a sofa to a durable good purchaser" as the advertisement effect and "it is possible to designate and use brown cardboard or white cardboard" as the type of the packaging material P, the matching device 200 determines that the sofa will be designed using computer graphics (CG), and carries out matching with a designer who can use CG and consider brown cardboard as conditions of the designer.

In addition, when the advertisement conditions include "(3) seasonal sales guide" as the advertisement effect, "it is possible to use only brown cardboard" as the type of the packaging material P", and "ultrafast" as the delivery time, the matching device 200 determines that the sales guide is suitable for a designer who is good at design of fliers and is inexpensive, and carries out matching with a designer who is good at design of fliers, is inexpensive, can meet an ultrafast delivery time, and can consider brown cardboard as conditions of the designer.

In addition, when the advertisement conditions include "(4) seasonal design for improving brand image" as the advertisement effect and "it is possible to use only white cardboard" as the type of the packaging material P, the matching device 200 determines that the brand image will be designed as a logo using CG, and carries out matching with a designer who is good at logo design and can use CG as conditions of the designer.

The printing device 400 has a printing unit 410 shown in FIG. 3. The printing unit 410 prints the advertisement image A on the packaging material P. The packaging material P is, for example, a cardboard box. In FIG. 3, the packaging material P is shown filled with a fine halftone dot pattern to indicate that the packaging material P is a brown cardboard box. The printing unit 410 may print not only the advertisement image A, but also a name of the product housed in the packaging material P, a code for managing the packaging material P, delivery destination information, additional information of the product such as a model number and an expiration date, a care mark indicating a handling method, and the like together with the advertisement image A.

The printing unit 410 has, for example, six print heads 411 for each of cyan, magenta, yellow, and black. Since the print heads 411 are positioned on the back surface side of the printing unit 410 that is not shown in FIG. 3, the print heads 411 are shown by broken lines that are hidden lines. For example, the six print heads 411 for each color are arranged in a height direction at different positions in a transport direction of the packaging material P transported on a conveyor C. Each of the plurality of print heads 411 ejects ink in, for example, a horizontal direction and performs printing. When printing is performed on an upper surface of the packaging material P or when printing is performed on the packaging material P in an unfolded state before box making, the print head 411 that ejects ink vertically downward is used. An abutting plate against which the packaging material P abuts may be disposed around the printing unit 410 to ensure an interval between the printing unit 410 and the packaging material P.

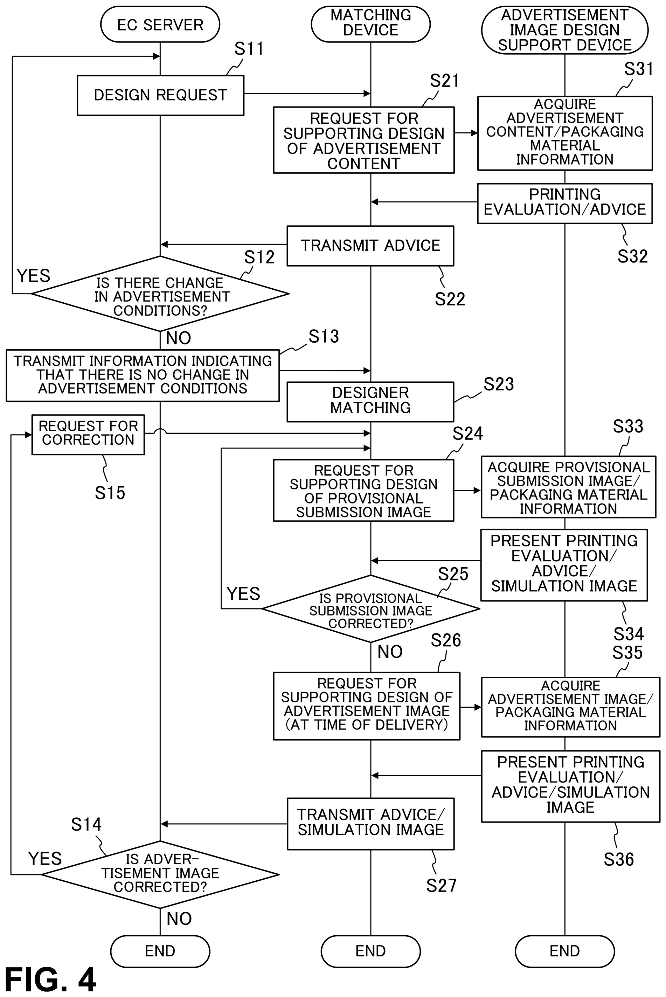

Next, an advertisement image design support method will be described with reference to the sequence diagram of FIG. 4. Description of matters overlapping with the above description will be omitted.

The processing shown in FIG. 4 is started by the EC server 300, the matching device 200, and the advertisement image design support device 100, for example, when the EC server 300 is requested by the business owner terminal 700 to design the advertisement image A for the packaging material P.

First, based on a request from the business owner terminal 700, the EC server 300 makes a design request (matching request) for the advertisement image A to the matching device 200 (Step S11).

Next, the matching device 200 makes a request for design support to the advertisement image design support device 100 to determine whether an unreasonable advertisement condition (excessive demand) has been set before matching with a designer (Step S21). When the request for design support is made, the acquisition unit 111 of the advertisement image design support device 100 acquires advertisement content (advertisement conditions) and packaging material information from the matching device 200 (Step S31).

The design support unit 112 of the advertisement image design support device 100 provides advice on the printing evaluation of the advertisement content when the advertisement content is printed on the packaging material P under the advertisement conditions for design of the advertisement image A (Step S32). For example, when the advertisement conditions include "(2) to recommend a sofa to a durable good purchaser" in FIG. 6 as the advertisement effect and both brown cardboard and white cardboard are allowed for the packaging material P, the design support unit 112 provides advice on the printing evaluation, such as "Since the flesh color tends to have low contrast and light blue may have large color deviations, a request for white cardboard printing may be received (from the designer)". The printing evaluation includes evaluation of at least one of hue, brightness, saturation, contrast, and density, and can thus be said to include color evaluation.

The matching device 200 transmits the advice received from the advertisement image design support device 100 to the EC server 300 (Step S22). The advice is transmitted from the EC server 300 to the business owner terminal 700, and the business owner of the business owner terminal 700 considers a change in advertisement conditions.

Next, the EC server 300 determines whether the business owner has changed the advertisement conditions (Step S12). When the advertisement conditions are changed (Step S12: YES), the EC server 300 repeats the processing from the design request in Step S11. In this case, the processing in Steps S21, S22, S31, and S32 (processing for determining whether an unreasonable advertisement condition has been set before matching) may be omitted, and designer matching processing (Step S23) to be described later may be performed.

When the advertisement conditions are not changed (Step S12: NO), the EC server 300 transmits information indicating that there is no change in advertisement conditions to the matching device 200 (Step S13).

Then, the matching device 200 carries out designer matching (Step S23). In addition, when acquiring a provisional submission image before delivery from the matched designer, the matching device 200 makes a request for design support to the advertisement image design support device 100 (Step S24). When the request for design support is made, the acquisition unit 111 acquires advertisement content (provisional submission image that is the advertisement image A designed by the designer) and packaging material information from the matching device 200 (Step S33).

The design support unit 112 advises the matching device 200 on the printing evaluation of the advertisement image A when the advertisement image A is printed on the packaging material P, and presents a simulation image in which the advertisement image A changes in color when printed on the packaging material P (Step S34). The design support unit 112 may directly advise the designer terminal 600 on the printing evaluation and present a simulation image to the designer terminal 600.

For example, as shown in the upper part of FIG. 7, the design support unit 112 presents an advertisement image A (provisional submission image) and a simulation image of an advertisement target that is a detergent a to the matching device 200, and provides advice on the printing evaluation, such as "Since the blue sky in the background has a large color deviation, it doesn't look like the blue sky. An improvement may be made by adding text or an illustration that evokes the blue sky" with a reference image (for example, an image in which the word "summer" and a hat image are added in the simulation image) attached. In this manner, it is desirable that, in consideration of the characteristics (in case of a detergent, it cleans dirt on clothes) of the product type of the advertisement target, the design support unit 112 provides color (tone) advice to increase the contrast difference between the blue sky and the clothes or add an image that makes people aware of the blue sky so that the advertisement effect related to the characteristics is increased in consideration of the above characteristics with respect to the color of the packaging material P and the design (the product image (detergent) included in the advertisement image A, the image of clothes that are surrounding constituent elements (image 1 related to the product), and the blue sky background image (image 2 related to the product)). In addition, it is desirable that the design support unit 112 provides advice such as recommendation of changing the color of the packaging material P according to the design. In all the simulation images shown in FIG. 7, it can be said that the packaging material P is brown cardboard (brown that is an example of a color other than white), the packaging material information includes packaging material color information (brown), and the printing evaluation includes color evaluation of the advertisement content. In addition, in order to increase simulation accuracy, the color information of the packaging material may be distinguished as brown cardboard (raw material C liner) or brown cardboard (raw material K liner) for each type of cardboard, may include an L*a*b* value that is a colorimetric value of the packaging material, or may include color profile information. In addition, the design support unit 112 may provide advice on the printing evaluation including color evaluation of the advertisement content not only according to the advertisement conditions such as the product type and the type of the packaging material P as a printing target but also according to other advertisement conditions such as advertisement effects (repeat purchases, sales guide, and the like). For example, when the advertisement effect is guiding sales, the design support unit 112 may provide advice on the printing evaluation including color evaluation to make the advertisement stand out.

In addition, for example, as shown in the middle part of FIG. 7, the design support unit 112 presents an advertisement image A (provisional submission image) and a simulation image of an advertisement target that is a flesh-color sofa to the matching device 200, and provides advice on the printing evaluation, such as "Since the flesh-color sofa has lower contrast, the advertisement effect is low. Darkening the sofa will improve the contrast slightly. We recommend adjusting the brightness of the background or suggesting the client to perform printing on white cardboard". In this case, in consideration of the characteristics (in case of a sofa, harmoniousness in the room space) of the product type of the advertisement target, the design support unit 112 provides advice on adjusting the contrast difference between the background image and the product to a predetermined value or more or a tone of peripheral furniture corresponding to the product so that the advertisement effect related to the characteristics is increased in consideration of the above characteristics with respect to the color of the packaging material P and the design (the product image (sofa) included in the advertisement image A, the background image (image 1 related to the product), and the image of the peripheral furniture that is a surrounding constituent element (image 2 related to the product)). For example, when the sofa is brown and the packaging material P is brown cardboard, the design support unit 112 cannot adjust the contrast difference between the background image and the product to a predetermined value or more, and thus it is desirable to provide advice to change the packaging material P to white cardboard. In addition, the design support unit 112 may provide advice so that the brightness, saturation, and hue of the peripheral furniture and the background are within a certain range compared to the product. The range may be changed depending on the product characteristics, the advertisement target (for young people, for seniors, of the like), or the like through a request of the business owner.

In addition, for example, as shown in the lower part of FIG. 7, the design support unit 112 presents an advertisement image A (provisional submission image) and a simulation image of an advertisement target that is a light blue sofa to the matching device 200, and provides advice on the printing evaluation, such as "The light blue sofa has good contrast if a color deviation is allowed. When the color deviation is not allowed, we recommend suggesting the client to perform printing on white cardboard".

Returning to FIG. 4, the matching device 200 transmits the advice and the like received from the advertisement image design support device 100 to the designer terminal 600, and determines whether the designer has corrected the provisional submission image (Step S25). When the provisional submission image is changed (Step S25: YES), the matching device 200 repeats the processing from the request for design support in Step S24.

When the provisional submission image is not changed (Step S25: NO), the matching device 200 makes a request for supporting design of the advertisement image A to the advertisement image design support device 100 when the advertisement image A from the designer is delivered (Step S26). When the request for design support is made, the acquisition unit 111 acquires advertisement content (advertisement image A delivered from the designer) and packaging material information from the matching device 200 (Step S35).

The design support unit 112 provides advice on the printing evaluation of the advertisement image A when the advertisement image A is printed on the packaging material P, and presents a simulation image in which the advertisement image A changes in color when printed on the packaging material P (Step S36). The design support unit 112 may provide advice and present a simulation image, similarly to the provision of advice and the presentation of a simulation image at the time of provisional submission shown in FIG. 7, or may only provide advice on the printing evaluation, such as "The light blue sofa advertisement has good contrast even when printed on brown cardboard".

The matching device 200 transmits the advice and the simulation image received from the advertisement image design support device 100 to the EC server 300 (Step S27). The advice and the simulation image are transmitted from the EC server 300 to the business owner terminal 700, and the business owner of the business owner terminal 700 considers whether to correct the advertisement image A.

Then, the EC server 300 determines whether the business owner desires to correct the advertisement image A (Step S14). When correction is desired (Step S14: YES), the EC server 300 requests the matching device 200 to correct the advertisement image A (Step S15), and the matching device 200 repeats the processing from the request for supporting design of the provisional submission image in Step S24. When no correction is desired (Step S14: NO), the processing shown in FIG. 7 ends.

The advertisement image A determined as above is printed by the printing device 400 on the packaging material P housing the corresponding product (detergent a, durable good, or the like) shown in FIG. 5 of the corresponding business owner when the product is sold.

In the above description, the design support by the design support unit 112 is performed in three stages: before design (Step S32 in FIG. 4); the advertisement image A (Step S34) that is a provisional submission image during design; and the advertisement image A (Step S36) after delivery, but the design support may be performed in at least one stage (once). In addition, the advertisement image A is not limited to an image designed by the matched designer, and may be an image designed by an individual business owner, a person in charge (designer) of a business owner of a start-up or the like, or generative artificial intelligence (AI) to be described later.

In addition, in the above description, the printing method of the printing unit 410 of the printing device 400 is an ink jet printing method. As above, the printing method of the printing unit 410 is desirably on-demand printing (capable of printing a variable image for each printing) from the viewpoint of handling a small lot of the advertisement image A, but any other printing method such as a flexographic printing method may be used. A distributor such as 3PL in which the printing device 400 is installed can obtain the cost for printing of the advertisement image A, in addition to usual contract work such as housing the product in the packaging material P. In addition, when the printing device 400 can handle a small lot of the advertisement image A through the on-demand printing as described above, the inventory (type) of the packaging material P can be reduced compared to an aspect in which the advertisement image A is printed in advance on the packaging material P before box making. A system including the advertisement image design support device 100 and the printing device 400 can be referred to as a printing system.

In addition, in the above description, examples of the packaging material P include a brown cardboard box (brown cardboard) and a white cardboard box (white cardboard), but the packaging material P may be a kraft bag, a box made of a material other than cardboard, or the like.

In addition, in the above description, in FIGS. 5 and 6, the advertisement conditions such as the advertisement effect (advertisement purpose), the conditions of the designer, and the like have been described, but these are merely examples. For example, the advertisement effect may be another type of advertisement effect such as sales guide for a specific product or enhancement of brand awareness. In addition, as the conditions of the designer, "specialized design", "can use CG", "can consider brown cardboard", and the like are merely examples of skills, and other skills such as "good at design by generative AI" may also be provided. The design support unit 112 of the advertisement image design support device 100 may support design using AI, or the matching device 200 may carry out matching using AI.

In the present embodiment described above, the advertisement image design support device 100 includes the acquisition unit 111 that acquires advertisement content and packaging material information of the packaging material P on which the advertisement content is printed, and the design support unit 112 that supports design of the advertisement content based on the packaging material information.

From the viewpoint of the method, the advertisement image design support method includes acquiring advertisement content and packaging material information of the packaging material P on which the advertisement content is printed (Steps S31, S33, and S35 in FIG. 4), and supporting design of the advertisement content based on the packaging material information (Steps S32, S34, and S36).

From the viewpoint of the program, the program causes a computer to realize a function of acquiring advertisement content and packaging material information of the packaging material P on which the advertisement content is printed (Steps S31, S33, and S35 in FIG. 4), and a function of supporting design of the advertisement content based on the packaging material information (Steps S32, S34, and S36).

In the advertisement image design support device 100, the advertisement image design support method, and the program, the design of the advertisement content is supported based on the packaging material information such as color information of the packaging material P. Therefore, for example, when the advertisement image A is printed on the packaging material P that is brown cardboard, it is possible to advise how the advertisement image A is printed or to present a simulation image. Accordingly, according to the present embodiment, it is possible to design the advertisement content to be printed on the packaging material P without specialized design knowledge. As a result, an individual business owner, a start-up, or the like can differentiate itself from other business owners and attract customers by printing the advertisement image A on the packaging material P housing a selling product.

In addition, in the present embodiment, the design support unit 112 (supporting design or function of supporting design: Step S32) provides advice on the printing evaluation of the advertisement content when the advertisement content is printed on the packaging material P under the advertisement conditions for design of the advertisement image A.

As a result, it is possible to determine whether an unreasonable advertisement condition has been set before matching with the designer (before design). Accordingly, it is possible to prevent the processing from being sent back to the business owner (EC server 300) for rework after design, and eventually, it is possible to prevent an increase in cost and delivery time.

In addition, in the present embodiment, the advertisement content includes the advertisement image A, the acquisition unit 111 (obtaining or function of obtaining: Steps S33 and S35) acquires the advertisement image A designed by the designer matched by the matching device 200 under the advertisement conditions for design of the advertisement image A, and the design support unit 112 (supporting design or function of supporting design: Steps S34 and S36) provides advice on the printing evaluation of the advertisement image A when the advertisement image A is printed on the packaging material P.

As a result, even if there is no person in charge of design in a small or medium-sized company or the like, it is possible to request a design from the matched designer. In addition, since it is possible to provide advice on the printing evaluation of the actually designed advertisement image A, more specific advice can be provided compared to an aspect in which the printing evaluation for the advertisement content before design is performed under the advertisement conditions.

In addition, in the present embodiment, the advertisement image A as a target for which advice on the printing evaluation is to be provided by the design support unit 112 (supporting design or function of supporting design: Step S34) is a submission image provisionally submitted by the designer before delivery.

As a result, it is possible to provide advice on the printing evaluation while the designer performs design. Therefore, it is possible to increase the quality of the advertisement image A at the time of delivery.

In addition, in the present embodiment, the advertisement content includes the advertisement image A, and the design support unit 112 (supporting design or function of supporting design: Steps S34 and S36) presents a simulation image in which the advertisement image A changes in color when printed on the packaging material P.

As a result, the designer and the business owner can see the advertisement image A (simulation image) close to a state that the advertisement image A is actually printed on the packaging material P, and determine whether it is necessary to correct the advertisement image A.

In addition, in the present embodiment, the packaging material information includes packaging material color information, and the design support unit 112 (supporting design or function of supporting design: Steps S32, S34, and S36) provides advice on the printing evaluation including color evaluation of the advertisement content according to the advertisement conditions of the advertisement content.

As a result, it is possible to provide advice on the printing evaluation including color evaluation according to the advertisement conditions, that is, advertisement effects (repeat purchases, sales guide, and the like), the type of the packaging material P as a printing target (brown cardboard for a brown cardboard box, white cardboard for a white cardboard box, and the like), a product (product type) as an advertisement target, and the like. For example, even if the appearance of the advertisement image A changes due to the packaging material P having a color such as brown other than white, it is possible to provide advice on the printing evaluation including color evaluation. Therefore, it is possible to provide specific advice according to the advertisement content. The business owner or the designer who has received such advice can determine whether it is necessary to correct the advertisement image A.

Note that the present invention is not limited to the above-described embodiments as they are, and constituent elements can be modified and embodied without departing from the gist thereof at an implementation stage. Furthermore, various inventions can be formed by appropriately combining a plurality of constituent elements disclosed in the embodiments. For example, all the constituent elements shown in the embodiments may be appropriately combined. It is a matter of course that various modifications and applications can be made without departing from the gist of the invention. Hereinafter, some inventions described in the specification and drawings of the present application will be additionally described.

### [Supplementary Note 1]

An advertisement image design support device including:
an acquisition unit that acquires advertisement content and packaging material information of a packaging material on which the advertisement content is printed; and
a design support unit that supports design of the advertisement content based on the packaging material information.

### [Supplementary Note 2]

The advertisement image design support device according to Supplementary Note 1,
in which the design support unit provides advice on printing evaluation of the advertisement content when the advertisement content is printed on the packaging material under advertisement conditions for design of an advertisement image.

### [Supplementary Note 3]

The advertisement image design support device according to Supplementary Note 1,
in which the advertisement content includes an advertisement image,
the acquisition unit acquires the advertisement image designed by a designer matched by a matching device under advertisement conditions for design of the advertisement image, and
the design support unit provides advice on printing evaluation of the advertisement image when the advertisement image is printed on the packaging material.

### [Supplementary Note 4]

The advertisement image design support device according to Supplementary Note 3,
in which the advertisement image is a provisional submission image provisionally submitted by the designer before delivery.

### [Supplementary Note 5]

The advertisement image design support device according to Supplementary Note 1, 3, or 4,
in which the advertisement content includes an advertisement image, and
the design support unit presents a simulation image in which the advertisement image changes in color when printed on the packaging material.

### [Supplementary Note 6]

The advertisement image design support device according to any one of Supplementary Notes 1 to 5,
in which the packaging material information includes packaging material color information, and
the design support unit provides advice on printing evaluation including color evaluation of the advertisement content according to advertisement conditions of the advertisement content.

### [Supplementary Note 7]

An advertisement image design support method including:
acquiring advertisement content and packaging material information of a packaging material on which the advertisement content is printed; and
supporting design of the advertisement content based on the packaging material information.

### [Supplementary Note 8]

A program that causes a computer to realize:
a function of acquiring advertisement content and packaging material information of a packaging material on which the advertisement content is printed; and
a function of supporting design of the advertisement content based on the packaging material information.

## Claims

1. An advertisement image design support device (100) comprising:
an acquisition unit (111) that acquires advertisement content and packaging material information of a packaging material (P) on which the advertisement content is printed; and
a design support unit (112) that supports design of the advertisement content based on the packaging material information.

2. The advertisement image design support device (100) according to claim 1, wherein the design support unit (112) provides advice on printing evaluation of the advertisement content when the advertisement content is printed on the packaging material under advertisement conditions for design of an advertisement image (A).

3. The advertisement image design support device (100) according to claim 1,
wherein the advertisement content includes an advertisement image (A),
the acquisition unit (111) acquires the advertisement image designed by a designer matched by a matching device (200) under advertisement conditions for design of the advertisement image, and
the design support unit (112) provides advice on printing evaluation of the advertisement image when the advertisement image is printed on the packaging material (P).

4. The advertisement image design support device (100) according to claim 3,
wherein the advertisement image (A) is a provisional submission image provisionally submitted by the designer before delivery.

5. The advertisement image design support device (100) according to claim 1, 3, or 4,
wherein the advertisement content includes an advertisement image (A), and
the design support unit (112) presents a simulation image in which the advertisement image changes in color when printed on the packaging material.

6. The advertisement image design support device (100) according to any one of claim 1 to 5,
wherein the packaging material information includes packaging material color information, and
the design support unit (112) provides advice on printing evaluation including color evaluation of the advertisement content according to advertisement conditions of the advertisement content.

7. An advertisement image design support method comprising:
acquiring advertisement content and packaging material information of a packaging material (P) on which the advertisement content is printed (S31, S33, S35); and
supporting design of the advertisement content based on the packaging material information (S32, S34, S36).

8. A program that causes a computer (100) to realize:
a function of acquiring advertisement content and packaging material information of a packaging material (P) on which the advertisement content is printed (S31, S33, S35); and
a function of supporting design of the advertisement content based on the packaging material information (S32, S34, S36).
